# EUROPÄISCHE PATENTSCHRIFT

(11) **EP 3 704 013 B1**
(45) Veröffentlichungstag und Bekanntmachung des Hinweises auf die Patenterteilung: **06.08.2025**
(21) Anmeldenummer: 18852713.9
(22) Anmeldetag: 30.10.2018
(51) Int. Cl.: B62M 11/14, B62M 6/55, B62M 11/16, B62K 19/34, B62K 25/30, B62M 3/00, B62M 9/04, B62M 11/18, B62M 25/04

(54) **ANTRIEBSSTRANG MIT ZWEI SEPARATEN, MITTELS ZWISCHENGETRIEBE GEKOPPELTEN SCHALTBAREN GETRIEBEN**
DRIVE TRAIN COMPRISING TWO SEPARATE SHIFTABLE GEAR MECHANISMS WHICH ARE COUPLED BY MEANS OF INTERMEDIATE GEAR MECHANISMS
CHAÎNE CINÉMATIQUE COMPORTANT DEUX TRANSMISSIONS COMMUTABLES SÉPARÉES POUVANT ÊTRE ACCOUPLÉES AU MOYEN D'UNE TRANSMISSION INTERMÉDIAIRE

(30) Priorität: 02.11.2017 DE 102017012265; 29.10.2018 DE 102018008464
(43) Veröffentlichungstag der Anmeldung: 09.09.2020
(73) Patentinhaber: Donner, Wilfried, 53506 Rech (DE)
(72) Erfinder: Donner, Wilfried, 53506 Rech (DE)
(74) Vertreter: Ederer, Thomas Josef
(86) Internationale Anmeldenummer: PCT/DE2018/000314
(87) Internationale Veröffentlichungsnummer: WO 2019/086064

(56) Entgegenhaltungen:
- EP-A1- 1 583 688
- EP-A1- 1 982 913
- EP-B1- 1 583 688
- WO-A1-00/43259
- WO-A1-00/43259
- WO-A1-2011/013109
- WO-A1-2011/065850
- WO-A1-2018/224921
- WO-A1-95/12517
- WO-A1-95/12517
- WO-A1-96/27092
- WO-A2-2011/004988
- WO-A2-2011/004988
- CN-A- 1 073 504
- CN-A- 102 107 712
- CN-U- 206 171 708
- CN-U- 206 171 708
- CN-Y- 2 823 106
- CN-Y- 2 823 106
- DE-A1- 102013 013 881
- DE-A1- 102016 113 871
- DE-A1- 102017 110 781
- DE-A1- 19 506 219
- DE-U1- 202014 103 469
- DE-U1- 202014 103 469
- FR-A1- 2 969 982
- JP-A- 2001 234 990
- JP-A- H09 240 568
- US-A- 5 083 991
- US-A- 5 083 991
- US-A- 6 146 297
- US-A1- 2011 177 911
- US-A1- 2015 101 874
- US-A1- 2015 101 874
- US-B1- 8 777 791
- ANONYMOUS: "Bicycle gearing - Wikipedia", 29 March 2019 (2019-03-29), XP055575641, Retrieved from the Internet <URL:https://en.wikipedia.org/wiki/Bicycle_gearing#cite_note-10> [retrieved on 20190329]

## Beschreibung

Antriebsstrang mit zwei separaten , mittels Zwischengetriebe gekoppelten schaltbaren Getrieben Die Erfindung betrifft gemäß dem Oberbegriff des Hauptanspruchs einen Antriebsstrang für ein- bzw. zweispurige Fahrzeuge mit einem kurbelgetriebenen Tretlagerschaltgetriebe, das abtriebsseitig mit einem Ketten- oder Riemenantrieb verbunden ist, von dem eine Kette bzw. ein Riemen direkt oder schaltbar jeweils zu einem Ritsel an einer Hinterradnabe führt, die ebenfalls ein schaltbares Getriebe enthält. Vorteilhafte Ausgestaltungen sind in den Unter- und Nebenansprüchen angegeben. Schaltbare Getriebe sind aus dem Stand der Technik bekannt. CN 2 823 106 Y offenbart die Merkmale des Oberbegriffes des Anspruchs 1. Das Merkmal aller dieser Getriebe ist, dass entweder alle Gänge in der Hinterradnabe untergebracht sind oder alle Gänge in einem Tretlagerschaltgetriebe.

Nachteilig bei Hinterradnabengetrieben (z.B. EP 0 915 800 B1) ist, dass deren Masse in praktisch allen bekannten Fahradmodellen ca. zwei kg erreicht oder überschreitet und dass sich damit lediglich nur 130 Nm Spitzeneingangsmoment übertragen lässt und diese damit für vollgefederte Fahrräder ungeeignet sind. Moderne Kettenschaltungen mit 11 oder 12-fach Kassetten mit 10 bis 51 Zähnen haben zusammen mit einer Hinterradnabe, längerer Kette und Schaltwerk etwa 1 kg an ungefederter Masse.

Nachteilig bei den bekannten Tretlagerschaltgetrieben ist, dass sehr hohe Spitzendrehmomente weitgehend ungedämpft verkraftet werden müssen. Das aus der DE 10 2007 004 802 Al bekannte Getriebe verfügt über bis zu 18 Gänge und soll mit einem Spitzendrehmoment von 250 Nm belastet werden können. Dieses Drehmoment können schon Fahrer bei sportlicher Fahrweise aufbringen. Damit hat das Getriebe keine Reserven für Stoßspitzen bei Pedalaufsetzern, Tandemantrieb oder Einkoppelung eines zusätzlichen Motorantriebes oder Beidem

Ein weiterer Nachteil beider vorgenannten Getriebetypen ist, dass bei der Vielzahl der Gänge mit jeweils nur einer Klinke je Zahnrad in die im Inneren der auf einer Achse sitzenden Zahnräder in dort eingebrachte Verzahnungen eingegriffen werden muss, wobei jeweils eine punktförmige Belastung auftritt mit dem weiteren Nachteil, dass diese Klinken auch ungünstig unter Last, wegen ihrer kleinen Kontaktflächen geschaltet werden können.

Aufgabe der Erfindung ist es, einen Antriebsstrang zu schaffen, der die vorbeschriebenen Nachteile nicht aufweist. Die Lösung erbringt ein Splitgetriebe gemäß dem Hauptanspruch. Vorteilhafte Ausgestaltungen sind in den Unter- und Nebenansprüchen angegeben. Die folgenden Ausgestaltungen sind bevorzugte Ausführungen.

Das Getriebe besteht aus zwei getrennten Teilgetrieben. Das erste Teilgetriebe ist ein Tretlagerschaltgetriebe durch welches die Tretlagerwelle hindurchläuft. Hier werden n gleichgestufte Basisgänge geschaltet. Die weiteren Gänge erhält man über ein Nachschaltgetriebe mit zwei oder drei Gängen, welches sich in der Hinterradnabe befindet. Deshalb beanspruchen die Teilgetriebe wenig axialen Bauraum und bieten für das gegebenenfalls vorzusehende Einkoppeln weiterer Antriebe in den Antreiber des Tretlagerschaltgetriebes also in die Tretlagerwelle, z.B. einen Zusatz-E-Motor und/oder einen Tandemantrieb, genügend Bauraum. Damit wird erreicht, dass insgesamt 2n bzw. 3n Gänge ohne Gangsprungänderung hintereinander geschaltet werden können und das Tretlagerschaltgetriebe ein für alle üblichen Anwendungen ausreichendes Spitzeneingangsdrehmoment von z.B. 400 Nm auszulegen ist.

Vorzugsweise werden beide Teilgetriebe so gekoppelt, dass sie von nur einem Drehgriff aus geschaltet werden können. Die Kraftübertragung erfolgt vorzugsweise mit Schaltseilen, wobei das zweite Teilgetriebe entweder vom ersten Teilgetriebe vermittels Durchschleifen gesteuert wird, oder das zweite Teilgetriebe wie das erste Teilgetriebe vom Drehgriff aus, aber mit eigenen Seilzügen gesteuert wird.

Alternativ werden Schaltimpulse von einem Handschalter aus elektrisch, z.B. auf Schrittmotoren, übertragen, die die Bewegung der jeweiligen Schalteinrichtung der einzelnen Teilgetriebe linear oder rotatorisch bewirken.

In einer ersten, bevorzugten Ausführung besteht der Antriebsstrang aus einem Tretlagerschaltgetriebe (G01) mit n Gängen, einem Nachschaltgetriebe (G02) mit einem direkten Gang und einer Übersetzungsstufe ins Langsame, mithin zwei Gängen und einem Sekundärgetriebe (G04), welches als Ketten oder Riemenantrieb ausgebildet sein kann. Das Tretlagerschaltgetriebe ist vorzugsweise ein Schaltgetriebe mit koaxial zur Tretlagerwelle liegendem An- und Abtrieb, wobei es unerheblich ist, ob es ein Umlaufgetriebe oder eines mit Vorgelegewelle(n) ist. Desweiteren weist die Abtriebswelle einen gewissen Abstand von der Tretlagerwelle auf, wie z.B. WO 2012/156613 A1, DE10082555 B4, DE 10 2007 013 443 A und DE 10 2004 045 364 B4 zeigen. Es ist entweder ein Zahnrad-, ein Kettenrad- oder ein Reibschlussgetriebe wie es aus der DE: 60 2004 029 557.4 bzw. EP: 04 71 5691.4 bekannt ist, vorgesehen. Hat das Tretlagerschaltgetriebe (G01) n Gänge mit nahezu gleichen Gangsprüngen von s = 1 + p%/100, dann hat es eine Übersetzungsspanne von s^(n-1), und damit hat das Nachschaltgetriebe (G02) eine Übersetzung von i = s^n. Die gesamte Übersetzungsspanne ü beträgt dann ü = s^(2n-1).

Der Beginn dieser Übersetzungsspanne wird zudem mit der Übersetzung des Sekundärgetriebes festgelegt. Eine Variante der Ausführung verwendet ein anderes Nachschaltgetriebe (G02) in der Hinterradnabe, nämlich mit drei Gängen. Der erste Gang übersetzt ins Langsame mit i_1 = s^n, der zweite Gang ist der direkte Gang mit i_2 = 1 und der dritte Gang übersetzt ins Schnelle mit i_3 = s^(-n). Dieses Nachschaltgetriebe hat eine nur unwesentlich größere Masse als eines mit zwei Gängen und verdreifacht die schaltbare Gangzahl des Tretlagerschaltgetriebes (G01) ohne Gangüberschneidung bei gleichzeitiger Beibehaltung der Gangsprünge desselben. Bei der vorgenannten Konfiguration lassen sich sehr hohe Übersetzungsspannen ü = s^(3n-1) erreichen. Beispielsweise hat ein Tretlagerschaltgetriebe (G01) mit s = 1,1 einundzwanzig Gänge mit einer Übersetzungsspanne von ü = 1, 1 "(21 - 1) = 6,7275 mithin ca. 673 %. Im Tretlagerschaltgetriebe werden erkennbar weniger Gangstufen benötigt, und mit den eingesparten Zahnrädern sind auch Kosten und Masse reduziert. Das oben beschriebenen Split-Getriebe (G01 mit G02) kann mit drei Hohlrädern, drei Zweifachplaneten je drei mal und mit fünf Sonnenenrädern realisiert werden. Eine bevorzugte Auslegung des Sekundärgetriebes (G04) besteht darin, die Übersetzung so zu wählen, dass bei normalen Betriebs-Anforderungen, beispielsweise Radeln in ebenem Gelände und/oder bei Nichtvorhandensein von Gepäcklasten, das Nachschaltgetriebe überwiegend im direkten Gang betrieben wird.

Hat das Nachschaltgetriebe in der Hinterradnabe drei Gänge mit z.B. i_1 = 1.9, i_2 = 1 und i_3 = 1/1,9, so werden sich die Gangsprünge s des Tretlagerschaltgetriebes mit z. B. n = 3, n = 4, n = 5 und n = 6 Gängen so ausgelegt, wobei jedesmal die gleiche Hinterradnabe verwendet wird. Für die Gangsprünge s(n) erhält man s(n) = {n}sqrt(i_1 = 1.9). Es ergeben sich dann ca. für s(3) = 1.239, für s(4) = 1.174, für s(5) = 1.137 und für s(6) = 1.113. In den nachfolgenden Tabellen sind beispielhafte Ausführungen dargestellt.

| **Tabelle 1: Nachschaltgetriebe G02 mit 3 Gängen [s = 1,9 < 2]** | | | | | |
|---|---|---|---|---|---|
| | **Zähnezahlen** | | | | **Bemerkung** |
| | **Teilgetriebe 1** | | **Teilgetriebe2** | | Teilgetriebe 1: |
| Hohlrad | -113 | | | -113 | Antrieb: Hohlrad1; Abtrieb: Steg1 |
| | | | | | Teilgetriebe 2: |
| Steg/Planeten | 35 | 20 | 20 | 35 | |
| | | | | | Antrieb: Steg2; Abtrieb: Hohlrad2 |
| SonnenRad | ---- | 58 | 58 | ---- | Stege gekoppelt |

| **Tabelle 2: Tretlagerschaltgetriebe G01 mit 3 Gängen [s(3) = 1,239]** | | | | | |
|---|---|---|---|---|---|
| | **Zähnezahlen** | | | | **Bemerkung** |
| | | | | | Alle Übersetzungen <== 1 |
| Hohlrad | | -93 | | | Antrieb: Steg; Abtrieb: Hohlrad |
| Steg/Planeten | 34 | 21 | | | |
| SonnenRad | 36 | 48 | | | |

| **Tabelle 3: Tretlagerschaltgetriebe G01 mit 4 Gängen [s(4) = 1,174]** | | | | | |
|---|---|---|---|---|---|
| | **Zähnezahlen** | | | | **Bemerkung** |
| | **Teilgetriebe 1** | | **Teilgetriebe2** | | Alle Übersetzungen <= 1 |
| Hohlrad | | -84 | -84 | | Hohlräder gekoppelt |
| | | | | | Teilgetriebe 1: |
| Steg/Planeten | 23 | 17 | 17 | 23 | Antrieb: Steg1; Abtrieb: Hohlrad1 |
| SonnenRad | 42 | 51 | ---- | 42 | Teilgetriebe 2: |
| | | | | | Antrieb: Hohlrad2 Abtrieb: Steg2 |

| **Tabelle 4: Tretlagerschaltgetriebe G01 mit 5 Gängen [s(5) = 1,137]** | | | | | |
|---|---|---|---|---|---|
| | **Zähnezahlen** | | | | **Bemerkung** |
| | **Teilgetriebe 1** | | **Teilgetriebe2** | | Von den möglichen sieben Gängen werden fünf aufeinanderfolgende Gänge mit den z.B. kleinsten Übersetzungen geschaltet sonst wie Tretlagerschaltgetriebe G01 mit 4 Gängen |
| Hohlrad | | -90 | -90 | | |
| Steg/Planeten | 32 | 24 | 24 | 32 | |
| SonnenRad | 35 | 42 | 42 | 35 | |

| **Tabelle 5: Tretlagerschaltgetriebe G01 mit 6 Gängen [s(6) = 1,113]** | | | | | | | |
|---|---|---|---|---|---|---|---|
| | **Zähnezahlen** | | | | | **Bemerkung** | |
| | **Teilgetriebe 1** | | | **Teilgetriebe2** | | Alle Übersetzungen <= 1 | |
| Hohlrad | | | -93 | -93 | | Hohlräder gekoppelt | |
| | | | | | | Teilgetriebe 1: | |
| Steg/Planeten | 17 | 26 | 21 | 21(24) | 26(28) | | |
| | | | | | | Antrieb: Steg1; Abtrieb: Hohlrad1 | |
| SonnenRad | 54 | 44 | 51 | ---- | 44(41) | Teilgetriebe 2: | |
| | | | | | | Antrieb: Hohlrad2 Abtrieb: Steg2 | |

Bei z.B. 7 Gängen des Tretlagerschaltgetriebes mit z.B. s(7) = 1,145 ergibt sich für das Nachschaltgetriebe s = 2,58. Diese Konfiguration ist in den folgenden Tabellen dargestellt.

| **Tabelle 6: Nachschaltgetriebe G02 mit 3 Gängen [s = 2,58]** | | | | | |
|---|---|---|---|---|---|
| | **Zähnezahlen** | | | | **Bemerkung** |
| | **Teilgetriebe 1** | | **Teilgetriebe2** | | Teilgetriebe 1: |
| Hohlrad | -96 | | | -96 | Antrieb: Steg1; Abtrieb: Sonnenrad 1 |
| Steg/Planeten | 25 | 21 | 21 | 25 | Teilgetriebe 2: |
| | | | | | Antrieb: Sonnenrad 2; Abtrieb: Steg2 |
| SonnenRad | ---- | 51 | 51 | ---- | Sonnenräder gekoppelt |

| **Tabelle 7 :Tretlagerschaltgetriebe G01 mit 7 Gängen [s(7) = 1,145]** | | | | | |
|---|---|---|---|---|---|
| | **Zähnezahlen** | | | | **Bemerkung** |
| | **Teilgetriebe 1** | | **Teilgetriebe2** | | Hohlräder gekoppel |
| Hohlrad | | -92 | -92 | | Teilgetriebe 1: |
| | | | | | Antrieb: Steg 1; Abtrieb: Hohlrad1 |
| Steg/Planeten | 30 | 22 | 22 | 30 | Teilgetriebe 2: |
| SonnenRad | 39 | 46 | 46 | 39 | Antrieb: Hohlrad2 Abtrieb: Steg2 |

Eine weitere bevorzugte Ausführung eines Tretlagerschaltgetriebes mit 7 Gängen hat einen Gangsprung s(7) von ca. 1.1627 wobei das Nachschaltgetriebe 3 Gänge mit s =2,8824 aufweist. Das Nachschaltgetriebe wird mit Einfachplaneten aufgebaut, wobei die Masse und die axiale Baulänge weiter reduziert werden. Bei geschalteten, aufeinander folgenden 13 von 21 Gängen, stellt sich eine Übersetzungsspannweite von ca. 610% ein. Eine beispielhafte Konfiguration zeigen die folgenden Tabellen.

| **Tabelle 8: Nachschaltgetriebe G02 mit 3 Gängen [s = 2,8824]** | | | | | |
|---|---|---|---|---|---|
| | **Zähnezahlen** | | | | **Bemerkung** |
| | **Teilgetriebe 1** | | **Teilgetriebe2** | | Teilgetriebe 1: |
| Hohlrad | | -96 | -96 | | Antrieb: Steg1; Abtrieb: Sonnenrad 1 |
| Steg/Planeten | ---- | 22 | 22 | ---- | Teilgetriebe 2: |
| | | | | | Antrieb: Sonnenrad 2; Abtrieb: Steg2 |
| SonnenRad | ---- | 51 | 51 | ---- | Sonnenräder gekoppelt |

| **Tabelle 9: Tretlagerschaltgetriebe GO1 mit 7 Gängen [s(7) = 1,1627]** | | | | | |
|---|---|---|---|---|---|
| | **Zähnezahlen** | | | | **Bemerkung** |
| | **Teilgetriebe 1** | | **Teilgetriebe2** | | Hohlräder gekoppel |
| Hohlrad | | -84 | -84 | | Teilgetriebe 1: |
| | | | | | Antrieb: Abtrieb: Steg1; Hohlrad1 |
| Steg/Planeten | 25 | 18 | 18 | 25 | Teilgetriebe 2: |
| | | | | | Antrieb: Hohlrad2 Abtrieb: Steg2 |
| SonnenRad | 41 | 48 | 48 | 41 | |

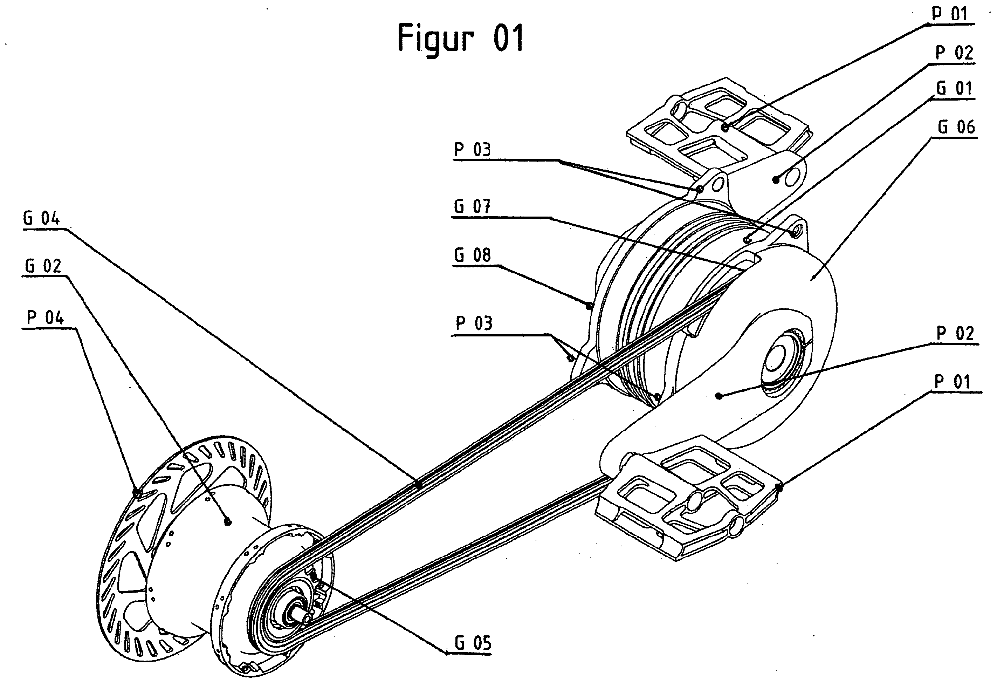

Figur 01 zeigt exemplarisch einen erfindungsgemäßen Antriebsstrang mit den Pedalen (P01), befestigt an Kurbelarmen (P02). Das Tretlagerschaltgetriebe (G01) ist beispielsweise mittels Befestigungslaschen (P03) an einem Fahrradrahmen (nicht dargestellt) befestigt Das Kettenradgehäuse dient auch als Drehmomentstütze (G06), wobei die Kette (G04) durch Öffnungen (G07), nur die obere ist hier sichtbar, herausgeftihrt ist. Ein antriebsseitiger Gehäusedeckel (G08), komplettiert das Gehäuse. Das zwei- bzw. dreigängige Nachschaltgetriebe (G02) befindet sich in der Hinterradnabe. Das Getriebe wird von einem Ritsel (G05) angetrieben. Dargestellt ist noch eine Bremsscheibe (P04), die am Nabengehäuse befestigt ist.

Zu einer vorteilhaften Ausführung hat der erfindungsgemäße Antriebsstrang drei Drehmomenteingänge. Alle Drehmomenteingänge befinden sich auf einer Seite , z.B. in Fahrtrichtung links. Das sind i.e. Der normale Einzelfahrer mit Tretkurbeln auf der Tretlagerwelle; ein Motorantrieb, der vorzugsweise achsparallel zur Tretlagerwelle angeordnet ist und mit Zahnrad-, Riemen-/Kettenkopplung mit der Tretlagerwelle / Antreiber verbunden ist, oder orthogonal zur Tretlagerwelle angeordnet ist und mit einem Winkelgetriebe mit der Tretlagerwelle verbunden ist. Der Motorantrieb verfliget jeweils über einen Überholfreilauf; alles, was der Antriebseinspeisung dient, ist voll gekapselt in einem Gehäuse angeordnet; ein Tandemantrieb ist mit der Tretlagerwelle direkt drehfest verbunden. Hierbei sind also beide Fahrer über eine Kette oder einen Riemen drehfest in stets gleicher relativer Kurbellage gekoppelt. Selbstverständlich können auch weniger Drehmomenteingänge eingerichtet und/oder genutzt werden.

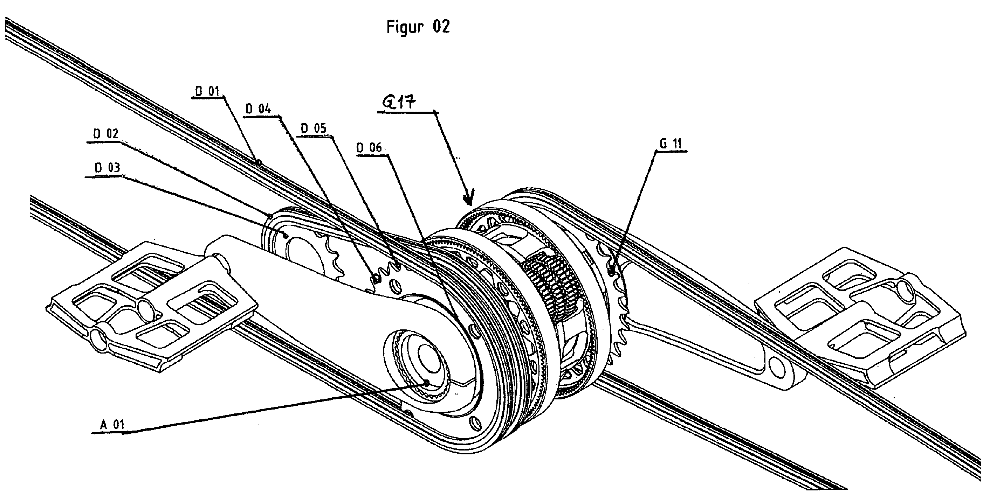

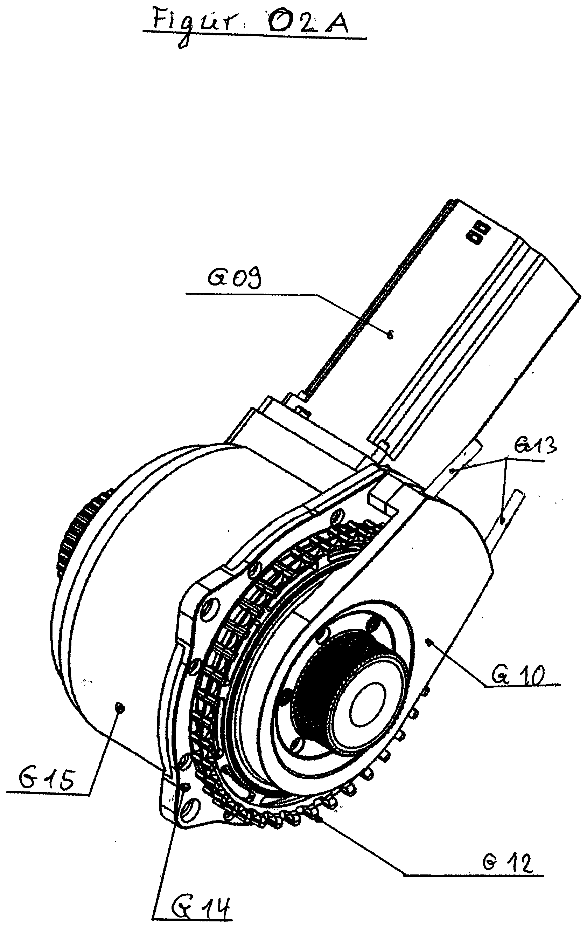

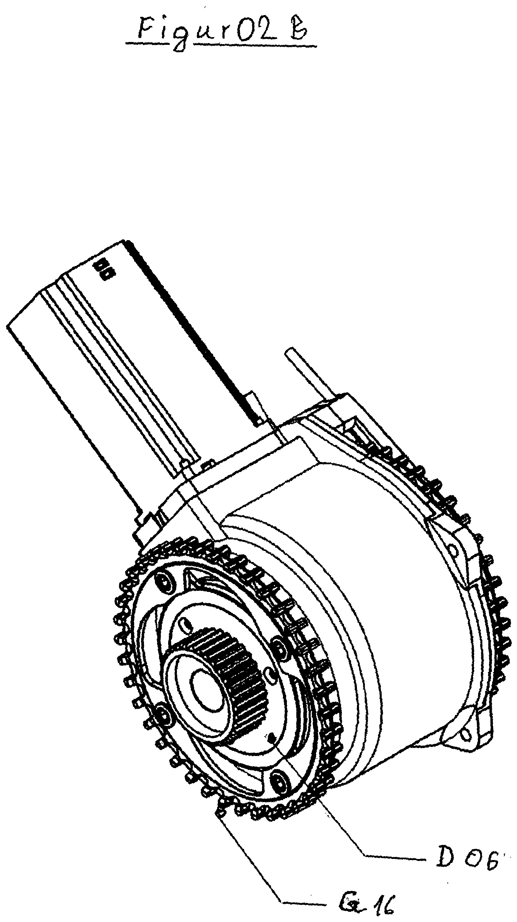

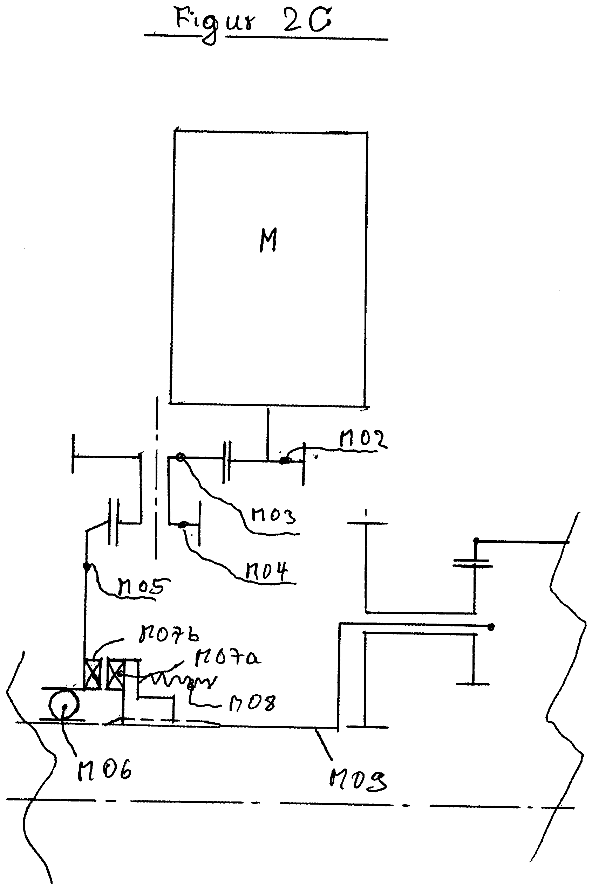

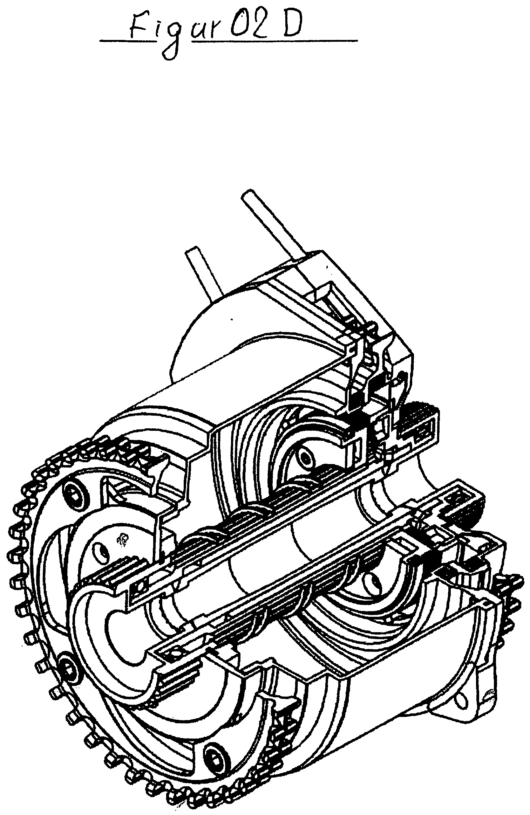

Figur 02 zeigt den Erfindungsgemäßen Antriebsstrang ohne Gehäuse. Die dargestellte Kette (D01), das zugehörige Kettenrad (D04), das mit dem Tandemadapter (D06) verschraubt ist, gehören zum Tandemantrieb. Der Tandemadapter ist drehfest mit dem antriebsseitigen Kurbeladapter (A01) über eine Verzahnung verbunden. Die Drehmomenteinkoppelung des nicht dargestellten, achsparallel angeordneten Motors erfolgt ausgehend vom Motorritsel (D03) vermittels der Kette (D02) auf das Kettenrad (D05), hier weitgehend verdeckt, und von dort über den Antreiber (G10) ins Getriebe. Bei Stillstand der Tretlagerwelle (A02) sorgt der Überholfreilauf (D07, D08) für die Entkoppelung der Tretlagerwelle von dem Antreiber, damit die Tretkurbeln vom Motor nicht mitgenommen werden. Wird der Motor außer Betrieb gesetzt, verhindert ein weiterer Freilauf, dass der Motor und dessen Untersetzungsgetriebe mitgeschleppt werden. Beide Freiläufe sind auch bei orthogonal zur Tretlagerwelle angeordneter Motorwelle vorhanden

Die neuartige Tretlagerwelle besteht aus dem mittleren Teil (A 02) und den beiden Kurbeladaptern (A01.1, A 01.2) die beispielsweise jeweils mit einer formschlüssigen und selbstzentrierenden Stirnverzahnung (A 01.3) mittels axialer Verschraubung - nicht dargestellt - miteinander verbunden sind. Die Kurbeladapter tragen eine Verzahnung (A 01.4), mit deren Hilfe die Tretkurbeln drehfest mit der Tretlagerwelle verbunden werden. Auf dem Kurbeladapter (A 01.1) befinden sich ggf. noch der Tandemadapter (D 06), ein Sicherungsring (P 06) und eine Freilaufscheibe (D 07) mit Stirnverzahnung die in nur einer Richtung eine Sperrfunktion hat. Die Freilaufscheibe und der Tandemadapter sind gegeneinander verschraubt (D 06.1) und durch den Sicherungsring (P 06) axial festgesetzt. Die adapterfeste Freilaufscheibe (D 07) ist über das Gleitlager (P 08) drehbar mit dem Antreiber (G 10) verbunden. Die Drehmomentübertragung in den Antreiber erfolgt mittels der axial in einer Verzahnung (G 10.1) des Antreibers (G 10) verschiebaren Freilaufscheibe (D 08), die eine in einer Drehrichtung wirkende Sperrfunktion hat, in die Verzahnung vom Freilauf (D07). Die gewendelte Feder (P 07) sorgt dafür, dass nur im Überholfall des Motors und beim Rückwärtspedalieren, eine Drehmomentunterbrechung stattfindet. Das für den Motorantrieb zuständige Ketten-, Riemen- oder Kronenrad sitzt auf dem Antrieb und ist mittels Entkoppelfreilaufs und einem Wälzlagers mit diesem verbunden. Wird der Motor außer Betrieb gesetzt, wird die Verbindung Motor / Antreiber unterbrochen und das Wälzlager sorgt für geringe Reibungsverluste. Bei einer weiteren vorteilhaften Ausgestaltung ist das Tretlagerschaltgetriebe (G01) ein Planetengetriebe und entspricht beispielsweise dem bekannten Aufbau der ersten beiden Stufen eines Getriebes nach EP 0 915 800 B1, wobei ein Aufbau mit Dreifachstufenplaneten 11 Gänge oder einer mit Zweifachstufenplaneten 7 Gänge liefert. Die Gangsprünge betragen beispielsweise 9% bei dreifach bzw. 13.6 % bei zweifach Stufenplaneten. Das neuartige erste Teilgetriebe hat kein Zwischengetriebe; sondern die Tretlagerwelle fällt mit der Rotationsachse des Getriebes zusammen.

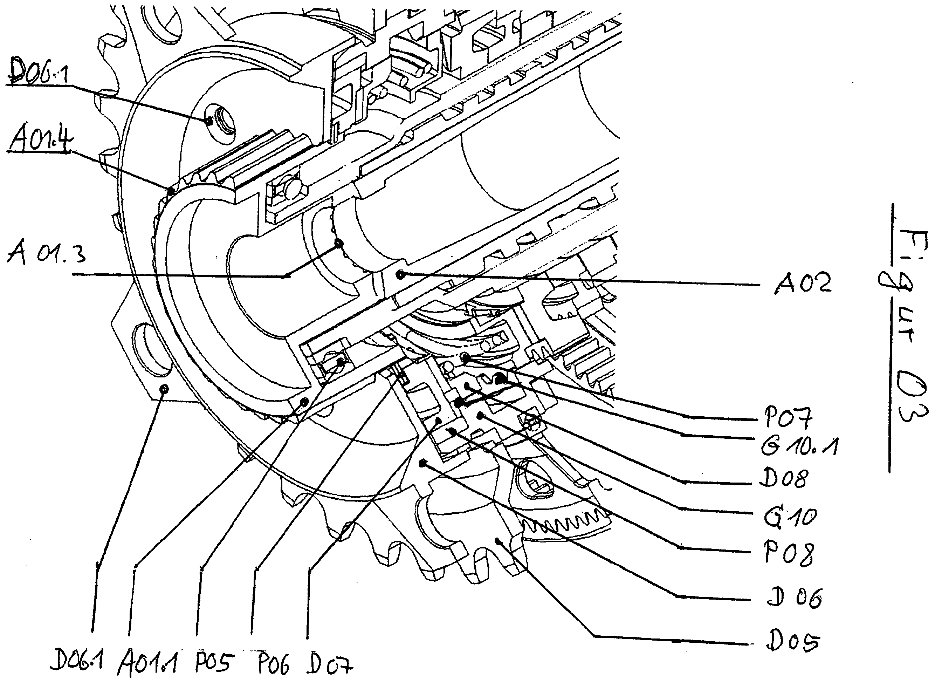

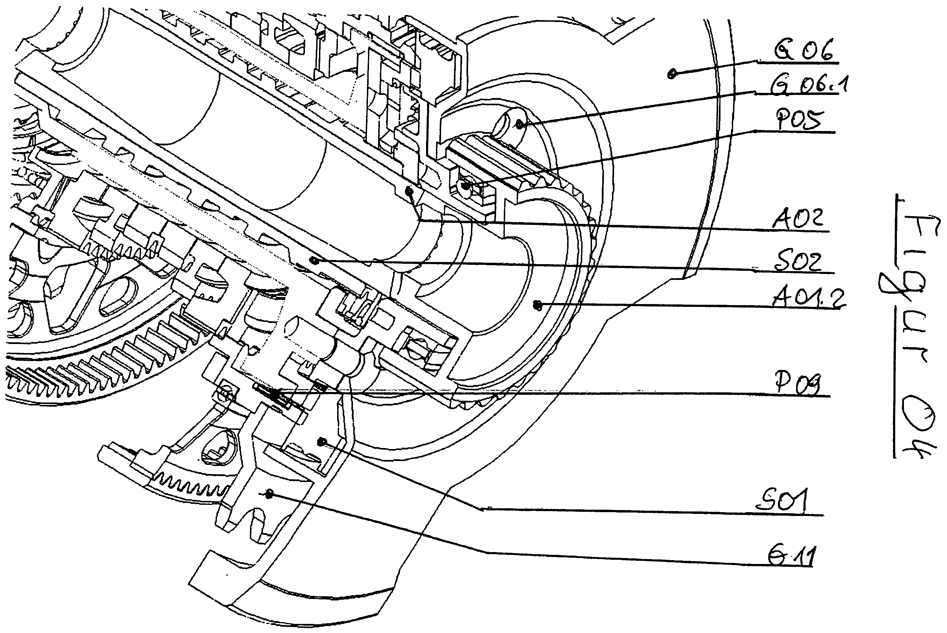

Für ein Getriebe dieser neuen Art, sind die folgenden erfinderischen Merkmale vorgesehen:
- Die Lagerung der Tretlagerwelle befindet sich jeweils in der Kurbelarmebene gemäß der Figuren 03 und 04
- Die Tretlagerwelle ruht auf Außenringen der Wälzlager (P 05). Die Enden der Tretlagerwelle verfügen über eine in axialer Richtung umlaufende ringförmige Nut.
- Die Tretlagerwelle besteht deshalb aus mindestens zwei Teilen, bevorzugt aber aus drei Teilen nämlich:
   einem Kurbeladapter Abtriebseite, (A 01.2)
   einem Kurbeladapter Antriebsseite, (A 01.1)
   einer ungelagerte Tretlagerwelle. (A 02)

Die Verbindung der drei Teile erfolgt über jeweils z. B. eine Hirtverzahnung (A 01.3). Die Teile sind gegeneinander verspannt.

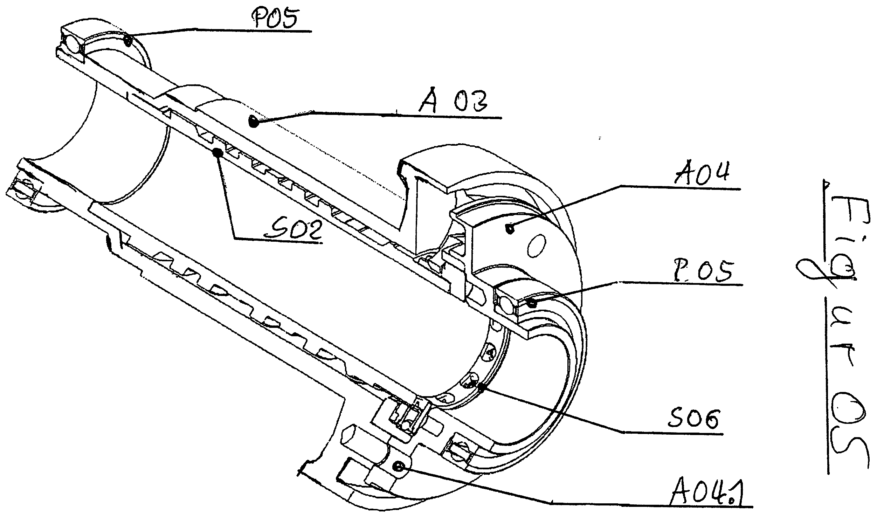

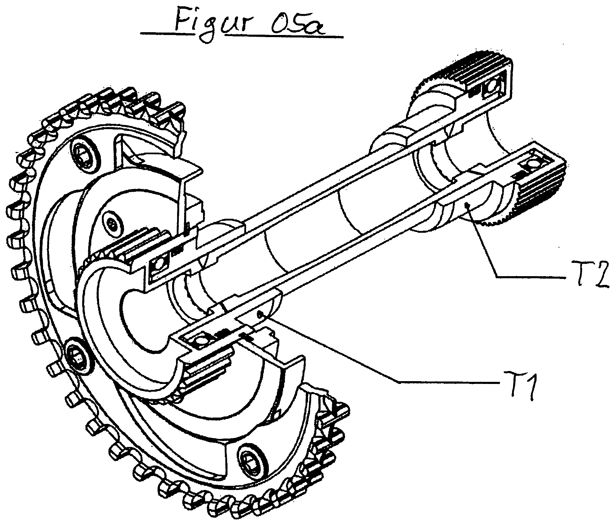

Figur 05a: Für das zweite Tretlager eines Tandems wird im Prinzip die gleiche Konstruktion wie bei dem Vorbeschriebenen verwendet. Anstatt einer mehrteiligen Getriebeachse werden hier nämlich zwei Achsstummel (T1) und (T2) Figur 05a mit den entsprechenden Lagersitzen direkt in das Tretlagergehäuse geschraubt oder gepresst, oder einstückig ausgeführt und in das Tretlagergehäuse geschraubt oder als einstückiges Tretlagergehäuse ausgebildet. Auf dem Kurbeladapter (A01.1) wird wie zuvor beschrieben, der Tandemadapter zur Aufnahme eines Ketten-/ Riemenrades montiert. Eine weitere bevorzugte Ausgestaltung ist die Vertauschung der Kurbeladapter derart, dass der Tandemadapter in Fahrtrichtung rechts montiert wird. Damit ist diese neuartige Tretlagerwelle in alle Fahrräder einbaubar. Die Länge der Tretlagerwelle richtet sich jeweils nach den baulichen Erfordernissen des Fahrrades.

Die Getriebeachse ist wie folgt neuartig ausgebildet, Figur 05. Die innen hohle Getriebeachse besteht aus zwei Teilen (A 03) und (A 04), wobei am Ende eines jeden Teils ein Lagerzapfen angebracht ist auf welchen die Kugellager (P 05) der Tretlagerwelle aufgeschoben sind. Der Getriebeseitige Teil beherbergt die Schaltklinken oder neuartig die Axialkupplungen, die die Sonnenräder jeweils drehfest mit der Achse verbinden können. (AZ: DE-10 2018 007 326.3 )

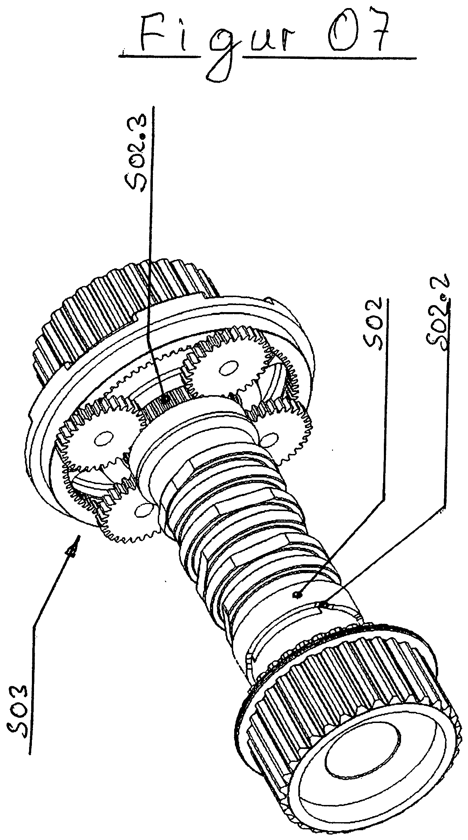

Die Figuren 05, 06 und 07 zeigen weitere Details:
Innerhalb der zweiteiligen Getriebeachse befindet sich koaxial frei drehbar die Tretlagerwelle (A02). Beide genannten Teile sind mittels der vorgenannten, innerhalb der Kurbeladapter (A01.1; A01.2) angebrachten, Kugellager (P05), drehbar miteinander verbunden.

Koaxial zwischen der Tretlagerwelle und der Getriebeachse befindet sich eine Schalttrommel (S 02) bekannter Art frei verdrehbar. Diese enthält Schaltnocken (S 02.1) und/oder Steuerkurven (S 02.2); bevorzugt aber nur Steuerkurven, wobei ausschließlich Axialkupplungen zur Festsetzung der Sonnenräder verwendet werden (AZ: DE-10 2018 007 326.3 ). Am abtriebsseitigen Ende der Schalttrommel befindet sich eine Verzahnung (S 02.3) zwecks Ankoppelung eines Steuerantriebs derselben.

Im Bereich der Verbindungsebene der beiden Achsteile befindet sich ein Planetengetriebe (S 03), welches als Standgetriebe ausgebildet ist, und zwar mit Stufenplaneten, wenn mehr als eine Umdrehung der Schalttrommel für alle Gänge benötigt werden bzw. mit Einfachplaneten, wenn höchstens eine Umdrehung derselben zum Durchschalten aller Gänge benötigt wird (S 04.1; S 04.2) als Schaltgetriebe. Sein Hohlrad (S 04.1) gibt den Antrieb, und ein Sonnenrad (S 02.3), das drehfest mit der Schalttrommel (S 02) verbunden ist, erbringt den Abtrieb. Ein umlaufender Spalt zwischen beiden Achshälften, durch den am Hohlrad angebrachte Klauen (S 03. 1. 1) nach außen greifen, ermöglicht, dass die Schalttrommel beispielsweise von einer Seilrolle, die korrespondierende Vertiefungen enthält, angetrieben wird. Die Gesamtübersetzung von einem Drehgriff der Gangschaltung am Lenker bis zur Schaltwelle ist beispielsweise 1: 2 bzw. 1:1.

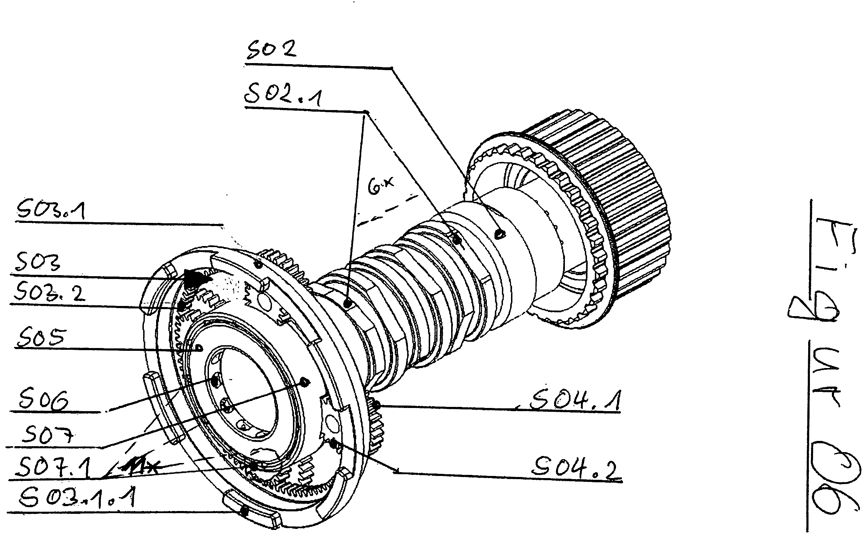

Figur 06 zeigt einen Schaltrotor und einen Schaltring für ein Elfganggetriebe. Der Schaltrotor (S 05) und der Schaltring (S 07), bilden zusammen mit z.B. 11 Kugelrasten (S 06) die Schaltrasten. Der Schaltring zentriert auch die beiden Achshälften, die miteinander verschraubt sind. Die Anzahl der Rastpositionen korrespondiert mit der Anzahl der bei einer Schalttrommelumdrehung schaltbarer Gänge.

Figur 01 zeigt eine Drehmomentstütze (G 06), die die von den festgesetzten Sonnenrädern mittels der Axialkupplungen bzw. Klinken auf die Achse übertragenen Gegenmomente über das Getriebegehäuse in den Rahmen einleiten. Diese ist vorteilhaft so ausgebildet, dass sie auch als Kettenradgehäuse dient; sie ist mit Durchbrüchen (G 07) versehen, die der Kette (dem Riemen) (G 04) den Eintritt / Austritt in das /aus dem Gehäuse ermöglichen. Die Drehmomentstütze ist mit der Achse und dem Gehäuse verschraubt. Falls das Kettenrad (G 11 Figur 02) gewechselt werden soll, kann die Drehmomentstütze einfach abgenommen werden. Die Seilrolle (S 01, Figur 03), die in einer umlaufenden Nut der Drehmomentstütze rotiert, verbleibt dabei in dieser. Somit ist die Schaltansteuerung einfach vom Getriebe, ohne dieses zu öffnen, abgekoppelt.

Figur 02A zeigt eine Ausführung des Getriebes (G01) mit einem orthogonal zu Tretlagerwelle angeordneten Motor (G09), einer weiterem Ausführung (G10) der Drehmomentstütze (G10) mit Schaltzugaußenspiralen (G13), einem Riemenrad (G12), einem Gehäuseflansch (G14) und einem Gehäuse (G15).

Figur 02B zeigt die Antriebsseite des Getriebes mit einem Tandemadapter (D06) und einem Riemenrad (G16) und einem bekannten BCD 104mm Lochkreisdurchmesser Anschluss.

Figur 02C zeigt den Getriebeplan für das Untersetzungsgetriebe bestehend aus dem Motorritsel (M02), dem Stirnrad (M03) welches mit dem Stirnrad (M04) drehfest verbunden ist und dem Konenrad (M05). Das Kronenrad wird mit dem Wälzlager (M06) auf dem Antreiber/Steg mit Planeten (M09) gelagert. Ein Entkoppelfreilauf , bestehend aus den Kupplungsteilen (M07a), (M07b) und der Feder (M08) arbeitet automatisch. D.h., dass die Freilauffunktion bei Stillstand des Motors und fortgesetzter Rotation der Tretlagerwelle in bekannter Weise ausgelöst wird. Die Kupplung (M07a) ist drehfest mit dem Kronenrad verbunden, wobei der Kupplungsteil (M07b) drehfest aber verschiebbar mit dem Antreiber/Steg verbunden ist. Die Position (M09) zeigt symbolisch den Steg /Antreiber mit Planeten und einem Hohlrad.

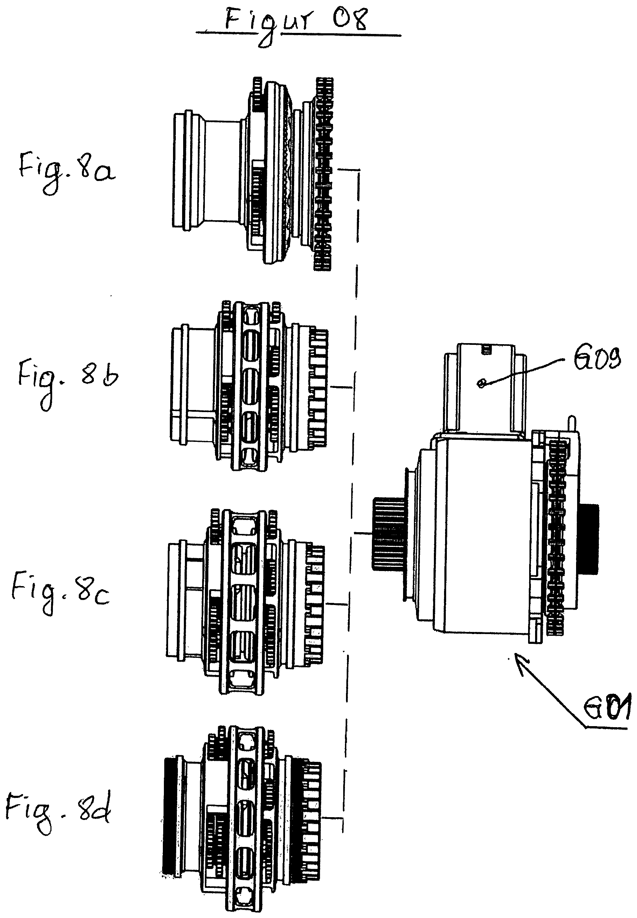

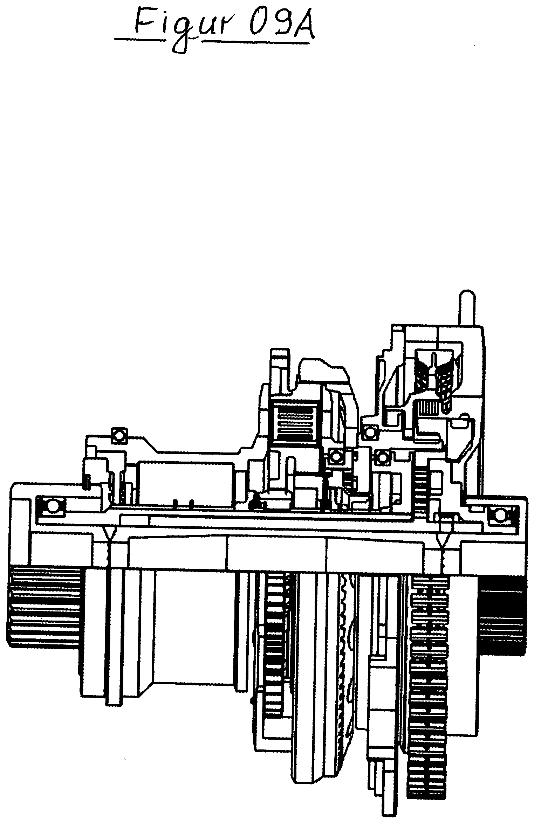

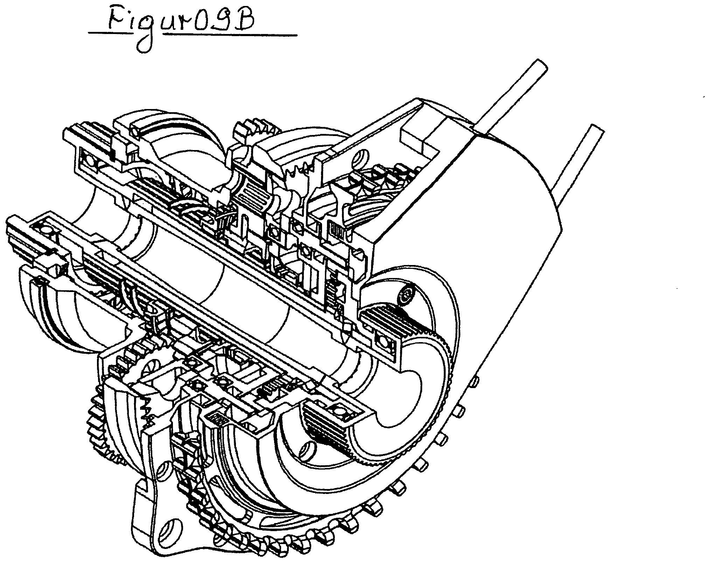

Figur 02D zeigt einen Dreiviertelschnitt des Getriebes (G01) ohne einen Getriebeblock. Figur 08 zeigt exemplarisch die Möglichkeiten des Getriebkonzepts. Das Getriebe (G01) ist so ausgelegt, dass die Getriebeblöcke nach Figuren 8A bis 8D in die Baugruppe nach Figur 2d eingebaut werden können. Hierbei stellt Figur 8A einen Dreigangetriebeblock gemäß Tabelle 2, Figur 8B einen Viergangetriebeblock gemäß Tabelle 3, Figur 8C Fünf- bzw. Siebengangetriebeblöcke gemäß Tabellen 4,7 und 9, sowie Figur 8D einen Sechsgangetriebeblock gemäß Tabelle 5 dar. Einen Dreiviertelschnitt des gemäß Tabelle 2 aufgebauten Getriebes zeigen die Figuren 09A und 09B in verschiedenen Ansichten, jedoch ohne Gehäuse.

Der Erfindungsgemäße Antriebsstrang erbringt zudem eine vorteilhafte Ausgestaltung einer Triebsatzschwinge. Bei vollgefederten Fahrrädern sind für den Hinterbau zahlreiche Konstruktionen bekannt. Allen gemein ist, dass, die Drehachse des Hinterbaus mit dem dort eingebauten Hinterrad zumindest in der Nähe der Rotationsachse der Tretlagerwelle platziert ist. Es gibt bekanntlich zwei Typen von Schwingen:
Entweder ist das Tretlager mittels Mehrgelenken, virtuell um die Tretlagerachse oder einem anderen geeigneten Punkt verschwenkbar; oder bei der zweiten Variante ist die Schwinge mittels einer mehr oder weniger von der Tretlagerrotationsachse entfernten Lagerung am Rahmen angelenkt.

Keine der vorgenannten Lösungen bleibt durch das Einfedern rückwirkungsfrei auf die Pedalen, oder das Antriebsmoment des Fahrers hat Rückwirkungen auf die Federung.Es ist eine Triebsatzschwinge bekannt (https://www.mtb-news.de/news/2015/07/27/hnf-heisenberg-xf1-e-mtb-pedelec-bmw-i-nicolai/), die mit zahlreichen Elementen eines Koppelgetriebes den gesamten Antriebsstrang incl. Motor in einer Schwinge enthält. Diesse Version benötigt eine komplizierte Kinematik, viele Gelenke mit entsprechenden Lagerungen, um die Schwinge näherungsweise um die Achse des Tretlagers verschwenkbar zu halten. Die zuvor beschriebenen erfindungsgemäßen Ausführungen der Ankopplung des Hinterbaues vermeiden die vorgenannten Nachteile und lassen sich mit niedriger kinematischer Komplexität und wenigen Teilen herstellen. Es wird für die Bewegung der Schwinge auch nur eine Lagereinheit benötigt (ohne die Dämpfer/Federlagerung). Bei rahmenfest angeordnetem Tretlagergetriebe bei Rotation der Schwinge um das Getriebegehäuse und einer Sekundärübersetzung des Ketten- bzw. Riemengetriebes von i_Sek = 1, bleibt die Pedalbewegung unbeeinflusst von Einfederungsvorgängen der Schwinge.

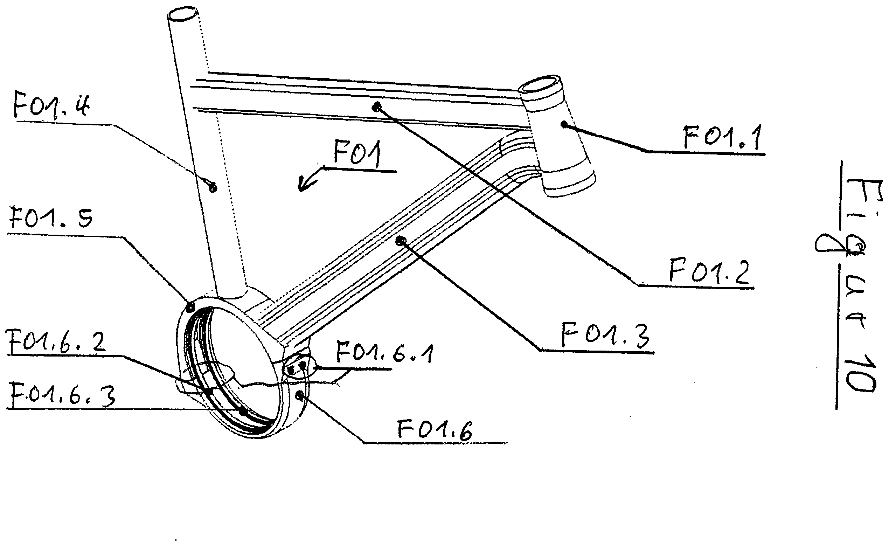

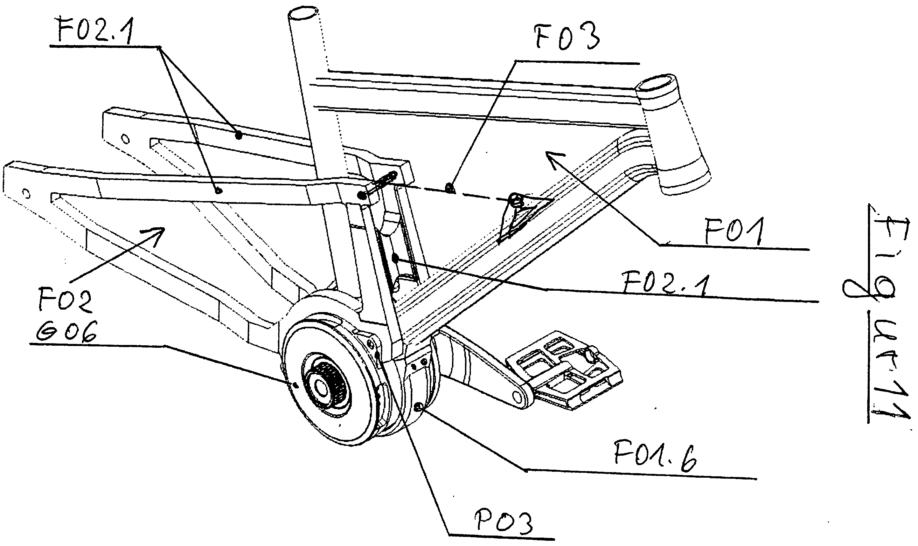

Figur 10 zeigt den Hauptrahmen (F01), bestehend aus den Rahmenrohren (F01.1) bis (F01.4), dem Adapter (F01.5), der Schelle (F01.6) nebst Schrauben (F01.6.1). Die Wälzlager (F01.6.2) und (F01.6.3) dienen der Lagerung des Getriebes, wenn dieses mit der Schwinge drehfest verbunden ist. Figur 11 zeigt den kompletten Rahmen mit dem Hinterbau (F02), bestehend aus den Teilen (F02.1) und einer Feder und einem Dämpfer (F03).

Muskelbetriebene ein - oder mehspuriger Fahrzeuge, mit oder ohne einen unterstützenden Motor, benötigen für ihren Antrieb zwar nur moderate Leistungen, diese jedoch mit sehr niedrigen Drehzahlen, nämlich zwischen ungefähr 60 bis 120 Umdrehungen pro Minute. Dies bedingt hohe Drehmomente, die häufig mehrere hundert Nm erreichen. Entsprechend hoch sind die Anforderungen an Schaltgetriebe mit Zahnrädern. Üblicher Weise werden dabei evolventrische Verzahnungen verwendet, die einen Eingriffswinkel von ca. 20 Grad und ein symmetrisches Profil haben. Sind die Anforderungen hoch, so entspricht man ihnen durch eine geeignete Materialauswahl, eine Nachbehandlung der Zähne, wie Härten und Schleifen, und eine geeignete Wahl des Zahnmoduls und die Zahnbreite, oder eine Profilverschiebungen, eine Optimierung der Zahnfußkontur und nicht zuletzt über eine Vergrößerung des Eingriffswinkel. Dadurch lässt sich die Belastbarkeit erhöhen, um nur einige der bekannten Möglichkeiten zu nennen. Der Vergrößerung des Eingriffswinkels sind jedoch enge Grenzen gesetzt (Spitzgrenze).

Eine weitergehend vorteihafte Ausgestaltung eines Fahrradgetriebes bzw. dessen Antriebsstranges erbringt eine asymmetrische Verzahnung der Getrieberäder.

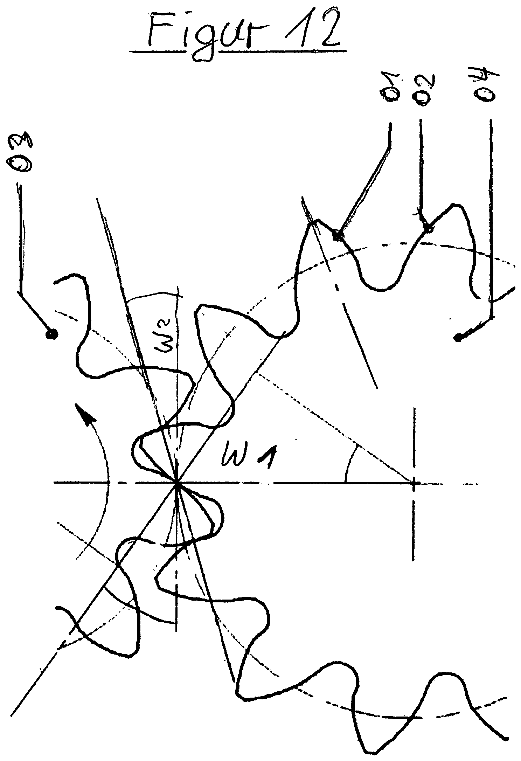

Die Tatsache, dass die Zähne überwiegend in nur einer Richtung belastet werden, wird zu einer erfindungsgemäßen Beseitigung der vorgenannten Einschränkungen genutzt. Erfindungsgemäß wird die Verzahnung asymmetrisch ausgeführt, d.h., dass die lastaufnehmende, unter Zugspannung stehende Flanke einen großen Eingriffswinkel hat - z. B. 30 bis 45 Grad und darüber - und die unbelastete, unter Druckspannung stehende Flanke einen solchen von ca. 20 Grad oder weniger. Mithin wird die eine Flanke auf Kosten der anderen gestärkt. In Verbindung mit Zahnfußoptimierungen lassen sich so deutlich verbesserte Belastbarkeiten erzielen. Figur 12 zeigt die Eingriffssituation für ein Stirnradpaar. Position (03) ist das antreibende Rad, Pos. (04) das getriebene Rad. Die Flanke (01) hat etwa 25 Grad und die Flanke (02) 35 Grad als Eingriffswinkel.

## Patentansprüche

1. Antriebsstrang für muskelbetriebene ein- oder mehrspurige Fahrzeuge mit einem kurbelgetriebenen Tretlagerschaltgetriebe, das abtriebsseitig mit einem Ketten- oder Riemenantrieb verbunden ist, von dem eine Kette bzw. Riemen direkt oder schaltbar jeweils zu einem Ritzel einer Hinterradnabe führt, wobei in dem Antriebsstrang außer dem Tretlagerschaltgetriebe, das als primäres Schaltgetriebe (G01) mit n Gängen oder mit variabler Übersetzung ausgebildet ist, noch ein Nachschaltgetriebe (G02) als schaltbares Hinterradnabengetriebe mit m = zwei oder m = drei Gängen angeordnet ist, wobei n und m natürliche Zahlen sind, wobei der Antriebsstrang bis zu n mal m Gänge umfasst, wobei n Gänge in dem Tretlagerschaltgetriebe und m Gänge im Nachschaltgetriebe angeordnet sind, **dadurch gekennzeichnet, dass** der Antriebsstrang einen einzigen Dreh- oder Schaltgriff aufweist, und das Tretlagergetriebe und das Hinterradnabengetriebe jeweils Schaltmittel umfassen, die von dem einzigen Dreh- oder Schaltgriff aus durchgehend zu schalten sind.

2. Antriebsstrang nach Anspruch 1, **dadurch gekennzeichnet, dass** der Dreh- bzw. Schaltgriff mit den Schaltmitteln über einen durchgeschleiften Seilzug oder jeweils eigene zugehörige Seilzüge verbunden ist.

3. Antriebsstrang nach Anspruch 1, **dadurch gekennzeichnet, dass** die vorgenannten Getriebe Planetengetriebe (Umlaufgetriebe) sind.

4. Antriebsstrang nach Anspruch 1, **dadurch gekennzeichnet, dass** das primäre Schaltgetriebe (G01) n Gänge mit nahezu gleichen Gangsprüngen von s = (1+p%/100) hat, also eine erste Übersetzungsspanne von s^(n-1) und das Nachschaltgetriebe (G02) zwei weitere Gangstufen von i_1= s^(n) und i_2 = 1 aufweist, wodurch eine gesamte Übersetzungsspanne von s^(2n-1) erbracht wird bzw. das Nachschaltgetriebe drei gleichmäßig gestufte Gänge aufweist, wobei der erste Gang mit i_1=s^(n) ins Langsame übersetzt, der zweite Gang mit i_2=1 der direkte Gang ist und der dritte Gang mit i_3 = s^(-n) ins Schnelle übersetzt, womit sich insgesamt eine Übersetzungsspanne von s^(3n-1) ergibt.

5. Antriebsstrang nach Anspruch 4, **dadurch gekennzeichnet, dass** von 2n bzw. 3n schaltbaren Gängen nur aufeinanderfolgende k_1 < 2n bzw. k_2 < 3n Gänge geschaltet werden.

6. Antriebsstrang nach Anspruch 1, **dadurch gekennzeichnet, dass** das Tretlagerschaltgetriebe (G01) von einer Tretlagerwelle koaxial durchsetzt ist, die jeweils mit einem Zusatzelektromotor und/oder einem Tandemantrieb antriebsseitig verbunden ist und dass auf der Tretlagerwelle mindestens ein weiteres Ketten- oder Riemenrad angeordnet ist.

7. Antriebsstrang nach Anspruch 6, **dadurch gekennzeichnet, dass** der Zusatzelektromotor zusammen mit einem Überholfreilauf und einem Entkoppelfreilauf achsparallel oder achsorthogonal zur Tretlagerwelle am Getriebegehäuse oder Fahrradrahmen angeordnet ist.

8. Antriebsstrang nach Anspruch 6, **dadurch gekennzeichnet, dass** die Tretlagerwelle dreiteilig aus einem mittleren rohrförmigen Teil (A02) mit endseitigen Kurbeladaptern (A01.1; A01.2) selbstzentrierend, drehfest stirnverzahnt axial verschraubt verspannt zusammengesetzt ist oder zweiteilig nur aus zusammenpassend langen Kurbeladaptern besteht.

9. Antriebsstrang nach Anspruch 8, **dadurch gekennzeichnet, dass** auf einem Kurbeladapter (A01.1) ein Tandemadapter (D06), ein Sicherungsring (P06) und eine Freilaufscheibe (D07) als Teil eines Entkoppelfreilaufs angeordnet sind, welche mit dem Tandemadapter verschraubt ist und mittels einer Verzahnung (G10.1) axial verschieblich nur in einer Drehrichtung mit einem Antreiber (G10) des Tretlagerschaltgetriebes (G01) koppelnd verbunden ist.

10. Antriebsstrang nach Anspruch 6, **dadurch gekennzeichnet, dass** die Tretlagerwelle (A02) mittels Kugellagern (P05) auf einer hohlen Getriebeachse (A03) gelagert ist in der eine Schalttrommel (S02) drehbar gelagert ist, die Steuerkurven (S02.2) oder Steuernuten zur Gangschaltung des auf der Getriebeachse (A03) angeordneten Planetengetriebes (G17) trägt und endseitig über ein Planetenstandgetriebe (S03) von einer Seilrolle (S01) zur Gangeinstellung anzutreiben ist.

11. Antriebsstrang nach Anspruch 10, **dadurch gekennzeichnet, dass** die Getriebeachse (A03, A04) wenigstens zweiteilig ausgebildet ist und einen Schaltring (S07) trägt, der drehfest montiert ist und Aussparungen (S07.1) für Kugelrasten (S06) trägt die auf einem Schaltrotor (S05) montiert die Schaltstellungen der Schalttrommel festlegt.

12. Antriebsstrang nach Anspruch 1, **dadurch gekennzeichnet, dass** das Tretlagerschaltgetriebe (G01) einschließlich des Ketten- bzw. Riemenrades von einem mindestens dreiteiligen Gehäuse umschlossen ist, wobei ein Gehäuseteil das Ketten- bzw. Riemenrad umgreift und die Durchlässe für die Kette bzw. den Riemen aufweist und als Drehmomentstütze die Achse drehfest mit mindestem einem der anderen Gehäuseteile verbindet, die wiederum mit einem Fahrradrahmen verbunden sind.

13. Antriebsstrang nach Anspruch 12, **dadurch gekennzeichnet, dass** ein Hinterbau (F02) um das drehfest mit dem Fahrradrahmen (F01) verbundene Gehäuse des Tretlagerschaltgetriebes (G01) koaxial zur Tretlagerwelle (A02) schwenkbar gelagert ist.

14. Antriebsstrang nach Anspruch 12, **dadurch gekennzeichnet, dass** das Gehäuse des Tretlagerschaltgetriebes (G01) drehfest mit einem Hinterbau (F02) verbunden ist und koaxial schwenkbar um die Tretlagerwelle (A02) in einem Fahrradrahmen (F01) gelagert ist.

15. Antriebsstrang nach Anspruch 1, **dadurch gekennzeichnet, dass** in mindestens einem Schaltgetriebe (G01) (G02) lastaufnehmende Flanken der Verzahnung(en) einen großen Eingriffswinkel und unbelastete Flanken einen kleinen Eingriffswinkel aufweisen.

16. Antriebsstrang nach Anspruch 3 oder 4, **dadurch gekennzeichnet, dass** das Hinterradnabengetriebe (G02) aus zwei symmetrischen Teilgetrieben mit Übersetzungen i_a=s^n < 2 und i_b=1/i_a besteht, deren An- und Abtrieb jeweils über deren Steg bzw. Hohlrad erfolgt, wobei die beiden Teilgetriebe über deren Stege gekoppelt sind und deren Hohlräder den An- und Abtieb bewerkstelligen, oder wobei die beiden Teilgetriebe über deren Hohlräder gekoppelt sind, die fliegend gehalten sind und deren Stege den An- und Abtrieb bewerkstelligen.

17. Antriebsstrang nach Anspruch 3 oder 4, **dadurch gekennzeichnet, dass** das Hinterradnabengetriebe (G02) aus zwei symmetrischen Teilgetrieben mit Übersetzungen i_a=s^n >2 und i_b=1/i_a besteht, deren An- und Abtrieb jeweils über deren Sonnenräder bzw. deren Stege erfolgt, wobei die Sonnenräder miteinander verbunden sind und deren Stege den An- und Abtrieb bewerkstelligen.

## Claims

1. Drive train for muscle-powered single- or multi-track vehicles with a crank-driven bottom bracket gearbox, which is coupled on the output side to a chain or belt drive, from which a chain or belt leads directly or shiftably to a respective pinion of a rear wheel hub, wherein, in the drive train, apart from the bottom bracket gearbox, which is designed as a primary gearbox (GO1) with n gears or with variable transmission, a secondary gearbox (G02) is arranged as a shiftable rear wheel hub gearbox with m = two or m = three gears, wherein n and m are natural numbers, wherein the drive train comprises up to n times m gears, wherein n gears are arranged in the bottom bracket gearbox and m gears are arranged in the secondary gearbox, **characterized in that** the drive train comprises a single rotary or shift lever, and the bottom bracket gearbox and the rear wheel hub gearbox each comprise shift means which are to be shifted continuously from the single rotary or shift lever.

2. Drive train according to claim 1, **characterized in that** the rotary or shift lever is coupled to the shift means via a looped cable or respective associated cables.

3. Drive train according to claim 1, **characterized in that** the aforementioned gearboxes are planetary gears (epicyclic gears).

4. Drive train according to claim 1, **characterized in that** the primary gearbox (GO1) has n gears with almost identical gear transitions of s = (1+p%/100), i.e. a first transmission range of s^(n-1), and the secondary gearbox (G02) comprises two further gear ratios of i_1= s^(n) and i_2 = 1, whereby a total transmission range of s^(2n-1) is achieved, or the secondary gearbox has three evenly spaced gears, wherein the first gear with i_1=s^(n) shifts to slow, the second gear with i_2=1 is the direct gear and the third gear with i_3 = s^(-n) shifts to fast, whereby a total transmission range of s^(3n-1) is obtained.

5. Drive train according to claim 4, **characterized in that** of 2n or 3n shiftable gears, only consecutive k_1 < 2n or k_2 < 3n gears are shifted.

6. Drive train according to claim 1, **characterized in that** the bottom bracket gearbox (G01) is traversed coaxially by a bottom bracket shaft, which is coupled on the input side to a respective auxiliary electric motor and/or a tandem drive, and **in that** at least one further chain wheel or belt wheel is arranged on the bottom bracket shaft.

7. Drive train according to claim 6, **characterized in that** the auxiliary electric motor is arranged together with an overrunning freewheel and a decoupling freewheel parallel to the axis or perpendicular to the axis of the bottom bracket shaft on the gear housing or bicycle frame.

8. Drive train according to claim 6, **characterized in that** the bottom bracket shaft is three-part, consisting of a central tubular part (A02) with end-mounted crank adapters (A01.1; A01.2) that are self-centering, rotationally fixed, face-tooth meshed, axially bolted and braced, or consists of two parts made only of matching long crank adapters.

9. Drive train according to claim 8, **characterized in that** a tandem adapter (D06), a retaining ring (P06) and a freewheel disc (D07) are arranged on a crank adapter (A01.1) as part of a decoupling freewheel, which is screwed to the tandem adapter and is axially displaceable in only one direction of rotation by means of a toothing (G10.1) so that it is axially slidable and can only be coupled in one direction of rotation with a driver (G10) of the bottom bracket gearbox (GO1).

10. Drive train according to claim 6, **characterized in that** the bottom bracket shaft (A02) is mounted by means of ball bearings (P05) on a hollow gear axle (A03) in which a gear shifting drum (S02) is rotatably supported, which carries control cams (S02.2) or control grooves for gear shifting of the planetary gear (G17) arranged on the gear axle (A03) and can be driven at the end via a planetary stand gear (S03) by a rope pulley (S01) for gear setting.

11. Drive train according to claim 10, **characterized in that** the gear axle (A03, A04) is designed in at least two parts and carries a shift ring (S07) which is mounted so as not to rotate and carries recesses (S07.1) for ball detents (S06) which are mounted on a shift rotor (S05) and determine the gearshift positions of the gear shifting drum.

12. Drive train according to claim 1, **characterized in that** the bottom bracket gearbox (GO1), including the chain wheel or belt wheel, is enclosed by an at least three-part housing, wherein one housing part surrounds the chainor belt wheel and comprises the passages for the chain or belt and, as a torque support, connects the axle in a rotationally fixed manner to at least one of the other housing parts, which in turn are connected to a bicycle frame.

13. Drive train according to claim 12, **characterized in that** a rear frame (F02) is mounted pivotably around the housing of the bottom bracket gearbox (G01), which is connected in a rotationally fixed manner to the bicycle frame (FO1), coaxially to the bottom bracket shaft (A02).

14. Drive train according to claim 12, **characterized in that** the housing of the bottom bracket gearbox (GO1) is connected in a rotationally fixed manner to a rear frame (F02) and is mounted in a bicycle frame (FO1) so as to be coaxially pivotable about the bottom bracket shaft (A02).

15. Drive train according to claim 1, **characterized in that** in at least one gearbox (G01) (G02), load-bearing flanks of the gear teeth comprise a large angle of engagement and unloaded flanks comprise a small angle of engagement.

16. Drive train according to claim 3 or 4, **characterised in that** the rear wheel hub gearbox (G02) consists of two symmetrical partial gearboxes with transmission ratios i_a=s^n < 2 and i_b=1/i_a, the drive and output of which are respectively via their web or ring gear, wherein the two partial gearboxes are coupled via their webs and their ring gears effect the drive and output, or wherein the two partial gearboxes are coupled via their ring gears and their ring gears effect the drive and output, and wherein the two partial gearboxes are coupled via their webs and their ring gears effect the drive and output. ring gear, wherein the two partial gearboxes are coupled to each other via their webs and their ring gear wheels effect the drive and the drive, or wherein the two partial gearboxes are coupled to each other via their ring gear wheels, which are kept flying and whose webs effect the drive and the drive.

17. Drive train according to claim 3 or 4, **characterized in that** the rear wheel hub gearbox (G02) consists of two symmetrical partial gearboxes with transmission ratios i_a=s^n >2 and i_b=1/i_a, the input and output of which are effected via their sun gear wheels and their webs, respectively, wherein the sun gear wheels are coupled to one another and their webs effect the input and output.

## Revendications

1. Chaîne cinématique pour véhicules à propulsion musculaire à une ou plusieurs voies, comprenant une boîte de vitesses à pédales entraînée par manivelle, qui est reliée côté sortie à un entraînement par chaîne ou par courroie, à partir duquel une chaîne ou une courroie mène directement ou de manière commutable à un pignon d'un moyeu de roue arrière, dans laquelle, outre la boîte de vitesses à pédales, qui est conçue comme boîte de vitesses primaire (G01) à n rapports ou à rapport variable, il est encore disposée une boîte de vitesses secondaire (G02) sous forme de boîte de vitesses de moyeu de roue arrière commutable à m = deux ou m = trois rapports, n et m étant des nombres naturels, la chaîne cinématique comprenant jusqu'à n fois m rapports, n vitesses étant disposées dans la transmission à pédales et m vitesses dans la transmission secondaire, **caractérisé en ce que** la chaîne cinématique comporte une seule poignée tournante ou sélectrice, et la transmission à pédales et la transmission de moyeu arrière comprennent chacune des moyens de changement de vitesse qui peuvent être actionnés de manière continue à partir de la seule poignée tournante ou sélectrice.

2. Chaîne cinématique selon la revendication 1, **caractérisée en ce que** la poignée tournante ou de commutation est reliée aux moyens de commutation par un câble métallique bouclé ou par des câbles métalliques propres associés.

3. Chaîne cinématique selon la revendication 1, **caractérisée en ce que** les boîtes de vitesses précitées sont des réducteurs planétaires (engrenages planétaires).

4. Chaîne cinématique selon la revendication 1, **caractérisée en ce que** la boîte de vitesses primaire (G01) n rapports avec des sauts de vitesse pratiquement identiques de s = (1+p%/100), c'est-à-dire une première plage de rapports de s^(n-1), et la boîte de vitesses secondaire (G02) deux rapports supplémentaires de i_1= s^(n) et i_2 = 1, ce qui permet d'obtenir une plage de rapports totale de s^(2n-1) ou le réducteur secondaire comporte trois rapports uniformément étagés, le premier rapport avec i_1=s^(n) étant un rapport lent, le deuxième rapport avec i_2=1 étant le rapport direct et le troisième rapport avec i_3 = s^(-n) étant un rapport rapide, ce qui donne une plage de rapports totale de s^(3n-1).

5. Chaîne cinématique selon la revendication 4, **caractérisée en ce que**, parmi les 2n ou 3n rapports commutables, seuls les rapports consécutifs k_1 < 2n ou k_2 < 3n sont commutés.

6. Chaîne cinématique selon la revendication 1, **caractérisée en ce que** la boîte de vitesses à pédalier (G01) est traversée coaxialement par un arbre de pédalier qui est relié côté entrée à un moteur électrique auxiliaire et/ou à un entraînement tandem et **en ce qu'**au moins une autre roue à chaîne ou à courroie est disposée sur l'arbre de pédalier.

7. Chaîne cinématique selon la revendication 6, **caractérisée en ce que** le moteur électrique auxiliaire est disposé avec une roue libre de dépassement et une roue libre de découplage parallèlement à l'axe ou perpendiculairement à l'axe de l'arbre de pédalier sur le carter de transmission ou le cadre de la bicyclette.

8. Chaîne cinématique selon la revendication 6, **caractérisée en ce que** l'arbre du pédalier est en trois parties, constitué d'une partie tubulaire centrale (A02) avec des adaptateurs de manivelle (A01.1 ; A01.2) auto-centrés, solidaires en rotation, à denture frontale, vissés axialement et serrés, ou en deux parties composées uniquement d'adaptateurs de manivelle de longueur correspondante.

9. Chaîne cinématique selon la revendication 8, **caractérisée en ce que** sur un adaptateur de manivelle (A01.1) sont disposés un adaptateur tandem (D06), une bague de sécurité (P06) et un disque de roue libre (D07) en tant que partie d'une roue libre de découplage, qui est vissée à l'adaptateur tandem et, au moyen d'une denture (G10.1) de manière axialement mobile dans un seul sens de rotation avec un entraîneur (G10) du boîtier de vitesses à pédalier (GO1).

10. Chaîne cinématique selon la revendication 6, **caractérisée en ce que** l'arbre du pédalier (A02) est monté au moyen de roulements à billes (P05) sur un axe de transmission creux (A03) dans lequel est monté de manière rotative un tambour de changement de vitesse (S02) qui porte des cames de commande (S02.2) ou des rainures de commande pour le changement de vitesse du réducteur planétaire (G17) disposé sur l'axe de transmission (A03) et qui peut être entraîné à son extrémité par un réducteur planétaire (S03) à partir d'une poulie à câble (S01) pour le réglage de la vitesse.

11. Chaîne cinématique selon la revendication 10, **caractérisée en ce que** l'axe de transmission (A03, A04) est au moins en deux parties et porte une bague de commutation (S07) qui est montée de manière solidaire en rotation et porte des évidements (S07.1) pour des cliquets à bille (S06) qui, montés sur un rotor de commutation (S05), déterminent les positions de commutation du tambour de commutation.

12. Chaîne cinématique selon la revendication 1, **caractérisée en ce que** la boîte de vitesses à pédales (GO1), y compris la roue à chaîne ou à courroie, est entourée d'un boîtier en au moins trois parties, une partie du boîtier entourant la roue à chaîneroue à chaîne ou à courroie et comporte les passages pour la chaîne ou la courroie et relie l'axe de manière solidaire en rotation à au moins l'une des autres parties du boîtier, qui sont à leur tour reliées à un cadre de bicyclette, en tant que support de couple.

13. Chaîne cinématique selon la revendication 12, **caractérisée en ce qu'**une structure arrière (F02) est montée de manière pivotante autour du boîtier de la boîte de vitesses à pédalier (GO1) relié de manière solidaire en rotation au cadre de bicyclette (F01), coaxialement à l'arbre de pédalier (A02).

14. Chaîne cinématique selon la revendication 12, **caractérisée en ce que** le boîtier du dérailleur (GO1) est relié de manière solidaire en rotation à une structure arrière (F02) et est monté de manière pivotante coaxialement autour de l'axe de pédalier (A02) dans un cadre de bicyclette (F01).

15. Chaîne cinématique selon la revendication 1, **caractérisée en ce que**, dans au moins une boîte de vitesses (GO1) (G02), les flancs de la ou des dentures qui supportent la charge présentent un grand angle d'engrènement et les flancs non chargés présentent un petit angle d'engrènement.

16. Chaîne cinématique selon la revendication 3 ou 4, **caractérisée en ce que** le mécanisme de moyeu de roue arrière (G02) est constitué de deux mécanismes partiels symétriques avec des rapports de transmission i_a=s^n < 2 et i_b=1/i_a, dont l'entraînement et la sortie s'effectuent respectivement via leur âme ou leur couronne dentée, les deux mécanismes partiels étant couplés via leurs âmes et leurs couronnes dentées réalisant l'entraînement et la sortie, ou les deux mécanismes partiels étant couplés via leurs couronnes dentées, les deux couronnes dentées assurant l'entraînement et la sortie, et les deux mécanismes roue creuse, les deux engrenages partiels étant couplés par leurs âmes et leurs roues creuses assurant l'entraînement et la sortie, ou les deux engrenages partiels étant couplés par leurs roues creuses qui sont maintenues en porte-à-faux et dont les âmes assurent l'entraînement et la sortie.

17. Chaîne cinématique selon la revendication 3 ou 4, **caractérisée en ce que** le mécanisme de moyeu de roue arrière (G02) est constitué de deux mécanismes partiels symétriques avec des rapports de transmission i_a=s^n >2 et i_b=1/i_a, dont l'entraînement et la sortie s'effectuent respectivement par l'intermédiaire de leurs roues solaires ou de leurs âmes, les roues solaires étant reliées entre elles et leurs âmes assurant l'entraînement et la sortie.
